# EUROPEAN PATENT APPLICATION

(11) **EP 4 644 124 A1**
(43) Date of publication of application: **05.11.2025**
(21) Application number: 23921446.3
(22) Date of filing: 28.06.2023
(51) Int. Cl.: B32B 27/36, C08L 67/04, C08L 67/02, C08J 5/18

(54) **POLYESTER FILM, AND METHOD FOR MANUFACTURING POLYESTER FILM**

(30) Priority: 09.02.2023 KR 20230017300
(71) Applicant: SK microworks Co., Ltd., Chungcheongbuk-do 27818 (KR)
(72) Inventor: LEE, Seokin, Suwon-si, Gyeonggi-do 16338 (KR); HAN, Kweonhyung, Suwon-si, Gyeonggi-do 16338 (KR); JEONG, Bichnam, Suwon-si, Gyeonggi-do 16336 (KR)
(74) Representative: BCKIP Part mbB
(86) International application number: PCT/KR2023/009031
(87) International publication number: WO 2024/167072

(57) **Abstract**

One or more embodiments disclose a polyester resin composition and a method for manufacturing a polyester film. The method for manufacturing the polyester film comprises: a preparation operation of providing a first composition and a second composition; a melting operation of melting the first and second compositions to provide a first molten resin and a second molten resin; a sheet-forming operation of forming a sheet comprising a sheet laminate in which a first layer derived from the first molten resin and a second layer derived from the second molten resin are alternately laminated using a lamination device; and a film-forming operation of stretching the sheet to provide a polyester film comprising the stretched laminate. The first composition comprises a polymer resin having lactate residues and hydroxyalkanoate residues, and the second composition comprises an aliphatic polyester resin or an aliphatic-aromatic copolyester resin. The difference in specific gravity between the first molten resin and the second molten resin is less than 0.2. The embodiments provide a method for manufacturing an eco-friendly polyester film that exhibits improved noise properties, secures transparency, and possesses heat-shrink resistance and biodegradability.

## Description

### BACKGROUND

### 1. Technical Field

The embodiment relates to a polyester composition and a method for manufacturing a polyester film. The embodiment pertains to a biodegradable, noise-reduced polyester multilayer laminated film.

### 2. Description of Related Art

Polylactic acid resin is known as an eco-friendly material that is biodegradable in a relatively short period of time and leaves almost no harmful residues and allowing for reuse. However, when such polylactic acid resin is processed into film form, it generates considerable noise during use, which has served as a limitation in its commercialization.

To overcome the drawbacks of polylactic acid resin, a method has been proposed in which polylactic acid is blended with an aliphatic-aromatic copolyester to impart flexibility to the film. However, due to the low compatibility between the polylactic acid and the aliphatic-aromatic copolyester, the resulting film exhibits significantly reduced transparency, making it difficult to use in packaging applications where transparency is required.

The above-described background technologies are technical information that the inventors possessed for the derivation of the present invention or acquired in the process of developing the invention, and thus, they are not necessarily prior art that was disclosed to the general public before the filing of the present application.

Relevant prior art includes: (Patent Document 1) Korean Registered Patent No. 10-0904144; (Patent Document 2) Korean Registered Patent No. 10-2404216.

### SUMMARY

An object of the embodiment is to provide a composition for manufacturing a polyester film that exhibits improved noise characteristics, maintains transparency, and possesses biodegradability, as well as an efficient method for manufacturing the same.

Another object of the embodiment is to provide a polyester film that exhibits improved noise characteristics, maintains transparency, and has both shrinkage resistance and biodegradability.

**In** order to achieve the above objects, in one or more embodiments, a method for manufacturing a polyester film includes: a preparation operation of preparing a first composition and a second composition; a melting operation of melting the first and second compositions to provide a first molten resin and a second molten resin, respectively; a sheeting operation of forming a sheet including a sheet laminate in which a first layer derived from the first molten resin and a second layer derived from the second molten resin are alternately laminated by applying a lamination device; and a film-forming operation of stretching the sheet to provide a polyester film including a stretched laminate.

The first composition includes a polymer resin having lactide residues and hydroxyalkanoate residues, and the second composition includes an aliphatic polyester resin or an aliphatic-aromatic copolyester resin.

A specific gravity difference between the first molten resin and the second molten resin is less than 0.2.

The aliphatic polyester resin may comprise an adipic acid residue or a succinic acid residue.

The aliphatic-aromatic copolyester resin may comprise an aliphatic acid residue and a terephthalate residue.

The first composition and the second composition may be used in a volume ratio of 10:2 to 10:20.

The first composition may include the polylactic acid-based resin and the polyhydroxyalkanoates-based resin in a weight ratio of 100:2 to 100:35.

A difference in melt viscosity between the first molten resin and the second molten resin may be 4,500 P or less.

The laminate may have a multilayer structure including 10 or more layers in which the first layer derived from the first composition and the second layer derived from the second composition are alternately laminated.

The film-forming operation may include a longitudinal stretching process and a transverse stretching process.

The longitudinal stretching process may include stretching the sheet by 2 to 4 times at a temperature of 50°C to 100°C.

The transverse stretching process may include stretching the sheet by 3 to 5 times at a temperature of 60°C to 110°C.

The film-forming operation may further include a heat setting process after the stretching.

The heat setting process may be performed at a temperature of 70°C to 150°C.

In order to achieve the above objects, in one or more embodiments, a polyester resin composition includes a first composition and a second composition, wherein: the first composition includes a polylactic acid-based resin and a polyhydroxyalkanoates-based resin; the second composition includes an aliphatic polyester resin or an aliphatic-aromatic copolyester resin; and a specific gravity difference between the first and second compositions is less than 0.2.

The aliphatic polyester resin may include an adipic acid residue or a succinic acid residue.

The aliphatic-aromatic copolyester resin may include an aliphatic acid residue and a terephthalate residue.

### BRIEF DESCRIPTION OF THE DRAWINGS

FIG. 1, FIG. 2A, and FIG. 2B are conceptual cross-sectional views respectively illustrating an example of a polyester film according to an embodiment.
FIG. 3 is a conceptual diagram illustrating a noise measurement method applied to the noise evaluation in the embodiment.
FIG. 4 is a cross-sectional scanning electron microscope (SEM) image of the sample film of Example 1.

### DETAILED DESCRIPTION

Hereinafter, embodiments will be described in detail with reference to the accompanying drawings so that those skilled in the art to which the present invention pertains may readily implement the invention. However, the embodiments may be implemented in various different forms and are not limited to the specific examples described herein. Throughout the specification, like reference numerals are used to denote like elements.

In the present specification, the expression "a combination thereof" included in a Markush-type expression is intended to mean one or more mixtures or combinations selected from the group consisting of the elements listed in the Markush expression, and thus comprises at least one selected from the group.

In the present specification, the phrase "A and/or B" means "A, B, or both A and B."

Throughout the present specification, terms such as "first," "second," and the like are used merely to distinguish one element from another of the same kind. Singular forms include plural forms unless the context clearly indicates otherwise.

Unless otherwise specified, the term "ppm" used herein refers to weightbased concentration.

Unless otherwise specified, a numerical range of "A to B" comprises the lower limit A and the upper limit B, and even if not explicitly stated, comprises the boundary values.

The drawings may be schematically shown, exaggerated, or partially omitted for the purpose of illustration, and should not be construed as limiting the scope of the embodiments.

Polylactic acid (PLA) resin, a representative example of biodegradable polymers, has attracted attention as a potential substitute for conventional petroleum-based polyester films. However, films made from PLA resin are known to generate a relatively loud crackling sound during use, which has been pointed out as a drawback that hinders their application as packaging materials. In particular, when films containing PLA resin are used for packaging materials closely related to daily life-such as snack bags or bread bags-the crackling sound may be perceived by users as an unpleasant noise.

Noise, to the extent that it is referred to as "noise pollution," has become a social issue and is regarded as something to be reduced. Moreover, products that produce unnecessarily loud sounds tend to be avoided by consumers. Therefore, in order for biodegradable films to successfully replace conventional petrochemical-based films for eco-friendly purposes, it is important to provide biodegradable films that do not generate unnecessary noise.

The inventors have made various efforts to develop a film that possesses biodegradability while also exhibiting a low level of noise generation. As a result, the embodiments presented herein have been devised. Through these embodiments, the inventors provide a method for manufacturing a biodegradable polyester film with reduced crackling noise, as well as a polyester film itself and compositions applicable thereto.

Hereinafter, the embodiments will be described in greater detail.

### Polyester Resin Composition

In one or more embodiments, the polyester resin composition comprises a first composition and a second composition. The first composition may be applied to a first layer of the polyester film, as described below, and the second composition may be applied to a second layer of the polyester film, also described below.

The first composition comprises a polylactic acid (PLA)-based resin and a polyhydroxyalkanoates (PHA)-based resin.

The polylactic acid-based resin (PLA-based resin) is included in the first composition and is characterized by its biodegradability.

Unlike petroleum-based resins, PLA-based resins are derived from biomass, contributing to the reduction of carbon dioxide emissions. In addition, due to their biodegradability, PLA-based resins decompose more rapidly than petroleum-based resins when landfilled, as they are broken down by moisture and microorganisms, making them environmentally friendly.

The PLA-based resin may be included in an amount of 50 wt% or more based on the total weight of the first composition, or in an amount of 80 wt% or more, 85 wt% or more, 90 wt% or more, 93 wt% or more, 95 wt% or more, or 97 wt% or more. The PLA-based resin may be included in an amount of 99.9 wt% or less, or 99 wt% or less.

The PLA-based resin may comprise L-lactide residues, D-lactide residues, D,L-lactide residues, or combinations thereof.

The content of L-lactide residues in the PLA-based resin may be 80 mol% or more, or 83 mol% or more, 85 mol% or more, 88 mol% or more, 90 mol% or more, or 92 mol% or more, based on the total moles of the PLA-based resin. The content of L-lactide residues may be 99 mol% or less, 97 mol% or less, 95 mol% or less, or 93 mol% or less. In such cases, the heat resistance of the film manufactured using the composition may be further enhanced.

The content of D-lactide residues in the PLA-based resin may be greater than 0 mol%, or 0.5 mol% or more, or 1 mol% or more, based on the total moles of the PLA-based resin. The content of D-lactide residues may be 5 mol% or less or 3 mol% or less. In such cases, the stretchability of the film during the stretching process may be further improved.

The PLA-based resin may have a weight-average molecular weight (Mw) in the range of 100,000 to 1,000,000 g/mol, for example, 100,000 to 800,000 g/mol, 100,000 to 500,000 g/mol, or 100,000 to 300,000 g/mol. The weight-average molecular weight (Mw) may be measured by gel permeation chromatography (GPC). When the PLA-based resin has a weight-average molecular weight (Mw) within the above range, it may help improve the mechanical properties of the film manufactured from the composition.

The polyhydroxyalkanoate-based resin (PHA-based resin) is a semicrystalline thermoplastic polyester compound that can be produced through chemical synthesis or by microorganisms (bacteria or algae), and is used in the production of biodegradable plastics.

The PHA-based resin may comprise one or more selected from the group consisting of: poly(3-hydroxybutyrate) (P3HB); poly(4-hydroxybutyrate) (P4HB); poly(3-hydroxyvalerate) (PHV); poly(3-hydroxybutyrate-co-3-hydroxyvalerate) (PHBV); poly(3-hydroxyhexanoate) (PHC); poly(3-hydroxyheptanoate) (PHH); poly(3-hydroxyoctanoate) (PHO); poly(3-hydroxynonanoate) (PHN); poly(3-hydroxydecanoate) (PHD); poly(3-hydroxydodecanoate) (PHDD); and poly(3-hydroxytetradecanoate) (PHTD).

Specifically, the PHA-based resin may comprise at least one selected from the group consisting of: 3-hydroxybutyrate residues (3HB residues), 4-hydroxybutyrate residues (4HB residues), and combinations thereof.

The PHA-based resin may comprise 3HB residues in an amount of 50 mol% or more, and 55 mol% or more, or 60 mol% or more, based on the total moles of the PHA-based resin. The PHA-based resin may comprise 3HB residues in an amount of 100 mol% or less, and 80 mol% or less or 70 mol% or less.

The PHA-based resin may comprise 4HB residues in an amount of 50 mol% or less, or 45 mol% or less or 40 mol% or less. The PHA-based resin may comprise 4HB residues in an amount of 0 mol% or more, 20 mol% or more, or 30 mol% or more.

The PHA-based resin may contain both 3HB and 4HB residues, and may comprise 4HB residues in an amount of 30 mol% to 35 mol%, based on the total moles of the resin. In such a case, the crystallinity may be controlled during the molding process, which can help improve the mechanical properties of the film, particularly when forming a film.

The first composition may comprise the PLA-based resin and the PHA-based resin in a weight ratio of 100:2 to 100:35, 100:3 to 100:25, or 100:4 to 100:20. When a resin blend having such a ratio is used in the first composition, it may help reduce the loud noise typically generated when a film is manufactured using PLA-based resin. For example, when a stretched film is manufactured comprising a first layer comprising the first composition, the first composition in the above-described ratio may assist in controlling the crystallinity during stretching.

The first composition may further comprise inorganic particles. These inorganic particles may function as anti-blocking agents, although they are not limited thereto.

The inorganic particles may comprise, for example: silica (SiO₂), calcium carbonate (CaCO₃), indium tin oxide (ITO), aluminum hydroxide (Al₂(OH)₃), zinc oxide (ZnO), titanium dioxide (TiO₂), or barium sulfate (BaSO₄).

The D₅₀ of the inorganic particles may be 1 µm or more, or 1.5 µm or more. The D₅₀ may be 3 µm or less, or 2 µm or less.

The inorganic particles may be included in the first composition and thus incorporated into the first layer of the polyester film described below. The content of the inorganic particles may be 2,000 ppm or less, and more specifically 1,500 ppm or less, based on the total weight of the first composition. The inorganic particles may provide surface roughness to the first layer, thereby exhibiting an anti-blocking effect.

**In** addition, when the first composition comprises calcium carbonate, it may further contribute to reducing the noise generation of the polyester film described below.

The first composition may further comprise, as necessary, one or more general additives selected from: a static charge modifier, antistatic agent, antioxidant, thermal stabilizer, ultraviolet absorber, anti-blocking agent, or combinations thereof.

The second composition comprises an aliphatic polyester resin or an aliphatic-aromatic copolyester resin.

The aliphatic polyester resin may comprise adipic acid residues or succinic acid residues.

The aliphatic-aromatic copolyester resin may comprise aliphatic acid residues and terephthalate residues.

The aliphatic acid residues may be adipic acid residues or succinic acid residues.

The aliphatic polyester resin or aliphatic-aromatic copolyester resin may further comprise glycol residues.

In addition to adipic acid (or succinic acid) residues, the aliphatic polyester resin or the aliphatic-aromatic copolyester resin may further comprise succinic acid (or adipic acid), sebacic acid, glutaric acid, malonic acid, oxalic acid, azelaic acid, or nonanedioic acid.

The aliphatic-aromatic copolyester resin may further comprise, in addition to terephthalic acid residues, isophthalic acid, naphthalene-2,6-dicarboxylic acid, diphenylsulfone dicarboxylic acid, diphenyl ether dicarboxylic acid, diphenoxyethane dicarboxylic acid, or cyclohexane dicarboxylic acid.

The glycol residue may be a residue selected from the group consisting of alkylene glycols such as ethylene glycol, 1,3-propanediol, 1,4-butanediol, 1,5-pentanediol, 1,6-hexanediol, propylene glycol, neopentyl glycol, 2-methyl-1,3-propanediol, diethylene glycol; 1,4-cyclohexanediol, 1,4-cyclohexanedimethanol, polyethylene glycol, and mixtures thereof.

The resin included in the second composition may contain aliphatic acid components in an amount of 30 mol% or more, 40 mol% or more, 45 mol% or more, or 50 mol% or more, based on the total acid components. The aliphatic acid component may be present in an amount of 80 mol% or less, 70 mol% or less, or 60 mol% or less based on the total acid components. In this case, the biodegradability of the molded product or film prepared from the composition may be improved.

The resin applied to the second composition may be, for example, polybutylene adipate terephthalate (PBAT) resin, which may help improve the flexibility of a film or injection-molded article.

The resin may be, for example, polybutylene succinate adipate (PBSA) resin, which may contribute to noise reduction and improved processability during film production.

The resin may further compris one or more selected from the group consisting of: polybutylene succinate (PBS) resin, polybutylene adipate (PBA) resin, polybutylene succinate-adipate (PBSA) resin, polybutylene succinate-terephthalate (PBST) resin, polyhydroxybutyrate-valerate (PHBV) resin, polycaprolactone (PCL) resin, polybutylene succinate adipate terephthalate (PBSAT) resin, and combinations thereof.

The aliphatic polyester resin may have a weight-average molecular weight (Mw) of 50,000 to 400,000 g/mol, for example 50,000 to 300,000 g/mol, 50,000 to 200,000 g/mol, or 50,000 to 100,000 g/mol. The Mw may be measured by gel permeation chromatography (GPC). In such cases, compatibility and processability with the first composition may be enhanced.

The aliphatic-aromatic copolyester resin may also have a Mw of 50,000 to 400,000 g/mol, 50,000 to 300,000 g/mol, 50,000 to 200,000 g/mol, or 50,000 to 100,000 g/mol, measured by GPC. This can also provide good compatibility and processability with the first composition.

The second composition may further comprise, as needed, general one or more of: a static charge modifier, antistatic agent, antioxidant, thermal stabilizer, UV absorber, anti-blocking agent, or combinations thereof.

The first composition and the second composition are included separately within the polyester resin composition. The first composition forms the first layer of the polyester film described below, and the second composition forms the second layer, and they may be melt-extruded separately.

The first and second compositions may form part of a multilayer film through an extrusion process. When manufacturing a multilayer film with 10 or more, 25 or more, 55 or more, or 72 or more layers, a large difference in viscosity between the compositions may make it difficult to control pressure during melt extrusion. **In** addition, if there is a large difference in specific gravity between the two layers, it may be difficult to control the process to achieve the intended thickness ratio.

At 210 °C, the viscosity (melt viscosity) difference between the first composition and the second composition may be 4500 P or less. The viscosity (melt viscosity) difference may be 4200 P or less, 3500 P or less, 3000 P or less, 2000 P or less, 1000 P or less, or 500 P or less. The difference may be 0 P or more. When first and second compositions having such a viscosity difference are applied to film or injection-molded product manufacturing, pressure control in the extrusion process may become easier, and products having multilayer structures can be formed more efficiently. In particular, when manufacturing a sheet or film, it may be more advantageous for achieving uniform thickness of the resulting product.

The first composition may have a melt viscosity at 210 °C of 5000 P or more, or 7000 P or more, and 14,000 P or less, or 12,000 P or less. **In** this case, it may provide stable processability in extrusion-based processes.

The second composition may have a melt viscosity at 210 °C of 3000 P or more, or 4000 P or more, and 10,000 P or less, 9000 P or less, 8500 P or less, or 8000 P or less. In this case, it may also ensure stable processability during extrusion.

The melt viscosity may be measured using a rheometer (RDS).

To manufacture a multilayer sheet or film, the first and second compositions may be applied at a predetermined volume ratio.

The volume ratio of the first composition to the second composition may be 10:2 to 10:20, 10:3 to 10:15, or 10:4 to 10:11. In such cases, the resulting film may be more effective in reducing noise.

The first and second compositions may have relatively similar specific gravities. Specifically, the difference in specific gravity between the first composition and the second composition may be less than 0.2, 0.17 or less, 0.13 or less, 0.1 or less, 0.08 or less, 0.06 or less, or 0.04 or less. The specific gravity difference may be 0 or more, or greater than 0. When first and second compositions having such a small or substantially similar difference in specific gravity are used, lamination using molten resin, such as via T-die extrusion, may be performed more efficiently. Furthermore, during the process of manufacturing a multilayer film, thickness control becomes easier, and the in-plane uniformity and optical properties of the film may be improved.

The specific gravity of the first composition may be from 1 to 1.5, or from 1 to 1.4.

The specific gravity of the second composition may also be from 1 to 1.5, or from 1 to 1.4.

The specific gravity may be adjusted by modifying the type and/or content of the polymer resins included in each layer's composition, or by adjusting the type and/or content of inorganic particles mentioned above. Applying such compositions with controlled specific gravity may be advantageous for stably manufacturing multilayer films.

### Method for Manufacturing Polyester Film

In one or more embodiments, the method for manufacturing a polyester film comprises: a preparation operation, a melting operation, a sheeting operation, and a film-forming operation.

The preparation operation involves preparing a first composition and a second composition. Detailed descriptions of each composition are omitted here to avoid redundancy, as they have already been explained above.

The first and second compositions may each be prepared in chip form. Preparing the compositions in chip form may facilitate storage and allow for easier application during the melting process.

The preparation operation may further comprise a drying process for the first and second compositions in chip form.

The drying may be performed at 40 °C to 100 °C, or at 60 °C to 80 °C, for a duration of 2 to 24 hours, or 3 to 12 hours. For example, hot air drying may be employed. The moisture content in the dried chips may be 300 ppm or less, or 200 ppm or less. The moisture content may be 30 ppm or more. Using chips dried to this moisture content may significantly suppress bubble generation caused by moisture, thereby improving the appearance of the final product and ensuring stable processability.

The melting operation involves melting the first and second compositions to prepare a first molten resin and a second molten resin, respectively.

The melting temperature for obtaining the first molten resin by melting the first composition may be 190 °C to 240 °C, or preferably 200 °C to 230 °C.

The melting temperature for obtaining the second molten resin by melting the second composition may be 180 °C to 230 °C, or preferably 190 °C to 220 °C.

The melting process may proceed at a melting temperature within the range of 200 °C to 220 °C.

The melting temperatures of the first and second compositions may be identical or different. For example, the temperature difference between the melting of the first and second compositions may be 20 °C or less, or preferably 15 °C or less, and 0 °C or more. The melting temperatures may be adjusted intentionally to control melt viscosity. Specifically, when the extrusion system consists of a melting conduit (through which molten resin flows) - a lamination unit (e.g., multilayer block) - and a die, the temperatures of the melting conduits for the first and second compositions may be separately controlled. This approach may facilitate precise control of layer thickness in the resulting film.

Details regarding the melt viscosity of the first and second compositions are omitted here, as they are already described in the section on polyester resin compositions.

Details regarding the specific gravity of the first and second compositions are omitted here, as they are already described in the section on polyester resin compositions.

By using the first and second compositions that meet the specified conditions for melt viscosity and specific gravity, multilayer films can be more effectively manufactured, and layer thickness uniformity can be better controlled.

The sheeting operation comprises forming a sheet comprising a laminate in which a first layer derived from the first molten resin and a second layer derived from the second molten resin are alternately laminated using a lamination device.

The laminate may comprise 10 or more alternating layers of the first and second layers. More specifically, the laminate may comprise 24 or more, 54 or more, 72 or more, 144 or more, or 256 or more alternating layers of the first and second layers. The number of alternating layers may be 512 or less.

The laminate may optionally comprise a skin layer. The skin layer may be disposed on one or both sides of the laminate and form the outermost layer of the polyester film.

The skin layer may be formed by melting a skin layer composition and applying it on one or both sides of the laminate either during or after the sheeting operation.

The skin layer composition may be the first composition or the second composition. When either the first or second composition is used as the skin layer composition, process efficiency may be improved.

For example, when the skin layer is formed using the first (or second) composition, and one of the outer layers of the laminate is also formed of the same first (or second) composition, the two layers may be effectively recognized as a single layer during the manufacturing process.

Accordingly, a polyester film comprising a skin layer may comprise 11 or more alternating layers of the first and second layers. The laminate may comprise 25 or more, 55 or more, 73 or more, 145 or more, or 257 or more alternating layers. The number of alternating layers may be 513 or less.

The means for alternating lamination may be those typically used in film production, comprising, for example, a feedblock, multi-manifold, or similar devices.

The film-forming operation comprises stretching the sheet to form a polyester film. The film-forming operation may further comprise a heat-setting process after the stretching.

The stretching may be biaxial stretching, or sequential biaxial stretching.

The stretching may be carried out in the order of machine direction (MD) stretching followed by transverse direction (TD) stretching.

Before the stretching process, the sheet may undergo a preheating process, in which the sheet is preheated to a temperature of 50 °C to 80 °C.

The machine direction stretching may be carried out at 50 °C to 100 °C, with a stretch ratio of 2 to 4 times. The machine direction stretching may be performed at 55 °C to 85 °C with a stretch ratio of 2.5 to 3.5 times, or at 60 °C to 80 °C with a stretch ratio of 2.7 to 3.5 times. Through this stretching process, the polymer chain alignment and degree of crystallization may be controlled, which in turn may influence the mechanical properties of the polyester film.

The transverse direction (TD) stretching may be performed by stretching the sheet at 60 °C to 110 °C with a stretch ratio of 3 to 5 times. The TD stretching may be performed at 65 °C to 110 °C with a stretch ratio of 3.5 to 4.5 times, or at 75 °C to 100 °C with a stretch ratio of 3.5 to 4.5 times.

Through the stretching process, the mechanical properties and thickness stability of the polyester film may be further improved.

The heat-setting process may be conducted by holding the film at a temperature of 70 °C to 150 °C, 90 °C to 140 °C, 100 °C to 140 °C, or 110 °C to 130 °C. The heat-setting may be carried out such that the relaxation rate is within 3%, within 2%, or within 1.5%. The heat-setting time may be 1 second or more, or 3 seconds or more. The heat-setting time may be 60 seconds or less, 30 seconds or less, or 15 seconds or less. Through the heat-setting process, the dimensional stability of the polyester film may be further enhanced.

The method for manufacturing a polyester film may further comprise a coating layer forming operation and/or a printing layer forming operation after the film-forming operation.

The coating layer forming operation may be carried out by applying and curing polymer compounds such as ammonium-based compounds, phosphate-based compounds, acrylic resins, or urethane resins. However, any general method for forming a coating layer on one surface of a film may be applied without limitation.

The printing layer forming operation may be performed using any conventional printing method applicable to plastic films without particular limitation.

Through these processes, a high-quality polyester film can be produced efficiently and with relative simplicity. The characteristics of the resulting polyester film will be described below.

### Polyester Film

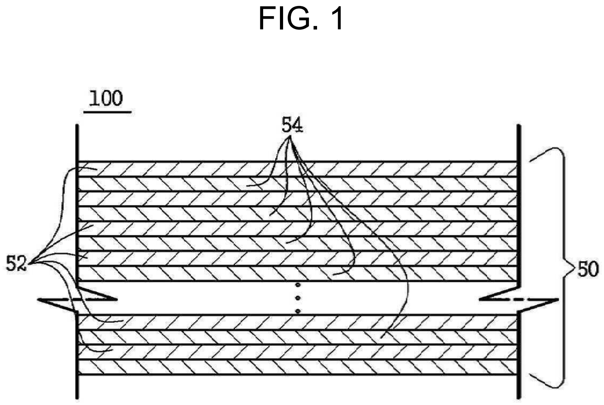

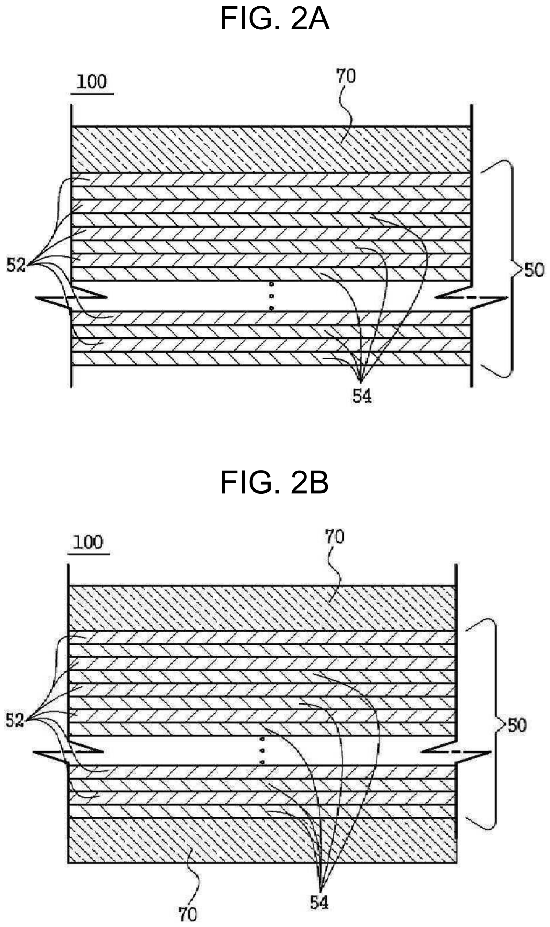

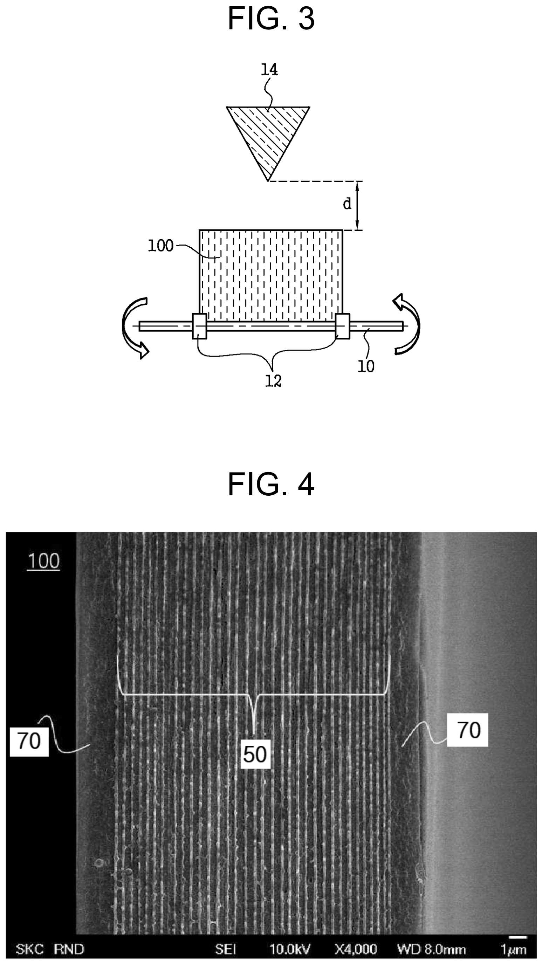

FIG. 1, FIG. 2A, and FIG. 2B are conceptual cross-sectional views respectively illustrating examples of a polyester film according to one or more embodiments, and FIG. 3 is a conceptual view illustrating a noise measurement method applied to noise evaluation in the embodiment. Hereinafter, the embodiments will be described in greater detail with reference to FIGS. 1 through 3.

In one or more embodiments, the polyester film 100 comprises a laminate 50 in which a first layer 52 and a second layer 54 are alternately laminated (see FIG. 1).

In one or more embodiments, the polyester film 100 comprises the above-described laminate 50 and a skin layer 70 disposed on one or both surfaces of the laminate (see FIGS. 2A and 2B).

The polyester film 100 is characterized by low noise generation and excellent dimensional stability.

### (Laminate)

The laminate 50 is a structure in which a first layer 52 and a second layer 54, each comprising different polymer resins, are alternately laminated. The polyester film 100, comprising the laminate 50, may provide both improved transparency and reduced noise.

The first layer 52 is a layer comprising a polymer resin having lactide residues and hydroxyalkanoate residues.

The second layer 54 is a layer comprising a polyester resin having adipic acid residues or succinic acid residues.

Detailed descriptions regarding the polymer resins, additives, and inorganic particles included in the first and second layers are omitted here to avoid redundancy, as they have already been described in the sections on the first and second compositions.

The second layer 54 has a more flexible characteristic compared to the first layer 52.

The relatively rigid first layer 52 and the relatively flexible second layer 54 are alternately laminated to form the laminate 50. The first layer 52 contributes to maintaining the overall mechanical strength of the laminate at or above a certain level, and the interaction between the first layer 52 and second layer 54 may lead to reduced noise generation during use of the film. In particular, compared to conventional PLA films, the disclosed film may offer significantly reduced equivalent noise level and noise in the low-frequency band.

Furthermore, due to the multilayer structure of the laminate, the polyester film may exhibit optical properties above a certain threshold. Especially, compared to a monolayer film made by blending the resins used in the first layer 52 and second layer 54, the laminate structure may exhibit reduced haze and enhanced optical clarity. This improvement in optical properties can be attributed to the application of a thin, multilayered laminate, which enhances properties such as haze while still maintaining the other advantageous characteristics of the film.

The classification and preparation of the total number of layers in the laminate 50 are as described in the manufacturing method section above.

By alternately laminating the first layer 52 and second layer 54 in a multilayer structure, the laminate 50 may provide a multilayer polyester film having mechanical strength, reduced noise, and improved thermal shrinkage properties.

The laminate 50 may comprise 36 or more alternating layers, or may more specifically comprise 36 to 144 layers. In such cases, the polyester film may significantly reduce noise when applied to typical packaging uses, such as snack bags.

In the laminate 50, the average thickness ratio of the first layer 52 to the second layer 54 may be from 1:0.2 to 1.5. The average thickness ratio may be from 1:0.3 to 1.3. When the average thickness ratio of the individual layers falls within the above range, both sufficient film strength and noise reduction effect can be achieved.

The laminate 50 may exhibit substantial biodegradability under conditions where microorganisms and moisture are present, thus offering environmentally friendly properties.

The laminate 50 may exhibit an average equivalent noise level of 78 dB or less in a noise evaluation test conducted by applying 180° rotation at 800 RPM for at least 30 seconds. The average equivalent noise level may be 77.5 dB or less, 76 dB or less, 74.5 dB or less, or 73 dB or less. The average equivalent noise level may be 72 dB or more.

The film noise level was measured using a noise analyzer 14. The sample film (or laminate) used for measurement was cut to A4 size, and fixed at one long edge to a bar 10 placed inside a noise-insulated box using a fixture 12 (e.g., jig). Noise was generated by rotating the bar, and the distance d between the tip of the film and the sensor of the noise analyzer was set to approximately 10 cm. The noise was measured while the bar was rotated 180° at 800 RPM for at least 30 seconds (see FIG. 3).

As an example, an A4-sized film was tested in a polycarbonate box of 650 (W) × 450 (D) × 500 (H) mm, and a CR-162C digital noise analyzer from Cirrus Research PIC was used (see FIG. 3). The noise analyzer was positioned approximately 10 cm from the film, which was held at both ends and rotated 180° at 800 RPM for more than 30 seconds. Data analysis was performed using NoiseTools Software, which enables evaluation of sound pressure level and equivalent noise level at each frequency over a 30-second period. For example, noise levels were measured in the frequency range of 31.5 Hz to 16,000 Hz.

The average equivalent noise level was evaluated for laminates or polyester films having a thickness between 15 µm and 30 µm.

The laminate 50, when the thickness of the laminate is 16 µm, may have a noise level at 250 Hz of 63 dB or less, 62 dB or less, 61 dB or less, or 60 dB or less in the above-described film noise evaluation. This means that it has a relatively low noise level at a frequency corresponding to low-pitched sound.

The laminate 50, when the thickness of the laminate is 16 µm, may have a noise level at 500 Hz of 53 dB or less, 52 dB or less, 51 dB or less, or 50 dB or less in the above-described film noise evaluation. This means that the noise level is low in a relatively low-frequency range that is perceived as loud by humans.

The laminate 50, when the thickness of the laminate is 16 µm, may have a noise level at 1,000 Hz of 59 dB or less, 57 dB or less, 56 dB or less, or 55 dB or less in the above-described film noise evaluation. This means that the noise level is low in a relatively low sound frequency range.

The laminate 50, when the thickness of the laminate is 16 µm, may have a noise level at 2,000 Hz of 67 dB or less, 66 dB or less, 65 dB or less, 64 dB or less, or 63.5 dB or less in the above-described film noise evaluation. This means that the noise level is reduced in a frequency range generally perceived as loud by humans, indicating a substantial decrease in noise.

The laminate 50, when the thickness of the laminate is 16 µm, may have a noise level at 4,000 Hz of 75 dB or less, 74 dB or less, 73 dB or less, 72 dB or less, or 71 dB or less in the above-described film noise evaluation. This means that the noise level is reduced in a frequency range generally perceived as loud by humans and corresponds to the range where the film generates the highest noise, indicating a substantial decrease in noise.

The laminate 50, when the thickness of the laminate is 16 µm, may have a noise level at 8,000 Hz of 72 dB or less, 71 dB or less, 70.5 dB or less, 70 dB or less, 69 dB or less, or 68 dB or less. This means that the generation of relatively high-pitched noise is reduced.

The laminate 50, when the thickness of the laminate is 16 µm, may have a noise level at 16,000 Hz of 63 dB or less, 62 dB or less, 60 dB or less, or 58 dB or less. This means that the generation of high-pitched noise is reduced.

The haze of the laminate 50 may be 10% or less, 9% or less, or 8% or less. The haze of the laminate 50 may be 2% or more or 4% or more. The haze is measured using a hazemeter (Model: SEP-H) from Nihon Semitsu Kogaku.

### (Skin Layer)

**In** one or more embodiments, the polyester film 100 may further comprise a skin layer 70.

The skin layer 70 may be disposed on one side of the laminate 50 (see FIG. 2A).

The skin layer 70 may be disposed on both sides of the laminate 50 (see FIG. 2B).

The skin layer 70 may be formed using the resin composition of the first layer 52. The skin layer 70 may be formed using the resin composition of the second layer 54. In such cases, the overall processability of polyester film production may be improved, and biodegradability may be imparted to the entire film.

When the skin layer 70 comprises the same resin composition as the first layer, it may further improve mechanical properties and process stability of the polyester film.

Like the first layer, the skin layer 70 may comprise inorganic particles, and may further comprise additives as needed, although the type and content of the inorganic particles may differ from those of the first layer.

The thickness of the skin layer 70, based on a reference value of 100 for the thickness of the laminate 50, may be applied at a thickness ratio of 2 or more, 5 or more, or 10 or more. It may also be applied at a thickness ratio of 30 or less, 25 or less, 20 or less, or 15 or less. The skin layer thickness may be 0.8 µm or more, 1.2 µm or more, or 2 µm or more, with no specific upper limit unless otherwise specified.

When the skin layer is applied to both upper and lower surfaces of the laminate, the thickness values described above refer to each individual skin layer.

The application of the skin layer 70 to the polyester film 100 may protect the laminate 50 from damage, enhance surface strength, and allow for control of surface feel and slip resistance of the film.

### (Film Properties)

**In** one or more embodiments, the polyester film 100 has a characteristic of low heat shrinkage, which means that the polyester film has a certain level of dimensional stability, and the embodiment may exhibit stable heat shrinkage behavior.

The heat shrinkage property is evaluated by preparing a sample of the polyester film cut to 300 mm (length) × 15 mm (width) in the machine direction, marking an effective length of approximately 200 mm, and then exposing it to heat in a convection oven at 100 °C for 5 minutes to measure the amount of shrinkage from the initial 200 mm. This is referred to as the machine direction heat shrinkage. Similarly, a sample is prepared in the transverse direction with dimensions 300 mm (length) × 15 mm (width), and the same test is conducted to evaluate the transverse direction heat shrinkage.

When the polyester film 100 is a biaxially stretched film, the machine direction heat shrinkage and transverse direction heat shrinkage may differ.

The heat shrinkage value is denoted as HS, the machine direction heat shrinkage as HSm, and the transverse direction heat shrinkage as HSh.

The polyester film 100 may have the larger value between HSm and HSh be 4% or less. The larger value may be 3.9% or less, 3.6% or less, 3.2% or less, 3% or less, or 2.5% or less. The larger value may be 1% or more.

The smaller value between HSm and HSh may be 2% or less. The smaller value may be 1.8% or less, 1.5% or less, or 1.2% or less.

The polyester film according to such embodiments may exhibit excellent dimensional stability even under harsh conditions, and is suitable for post-processing applications where heat or moisture is applied.

**In** one or more embodiments, the polyester film 100 may have an average equivalent noise level of 78 dB or less in a film noise evaluation test conducted by applying 180-degree rotation at 800 rpm for more than 30 seconds. The average equivalent noise level may be 77.5 dB or less, 76 dB or less, 74.5 dB or less, or 73 dB or less. The average equivalent noise level may be 72 dB or more.

For example, based on a thickness of approximately 25 µm, when all samples are measured under the same measurement conditions, the average equivalent noise level of a typical polyester film based on petroleum-based materials is approximately 80 to 83 dB, whereas that of a polyester film using polylactide resin is approximately 83 to 85 dB, showing a difference between the two.

**In** one or more embodiments, the average equivalent noise level is effectively suppressed or reduced, even when a biodegradable polymer such as polylactic acid resin is applied. That is, the embodiments may provide a biodegradable polyester film with more suppressed noise generation compared to a polyester film (based on petroleum-derived materials) applied, for example, as a packaging material.

The evaluation of the average equivalent noise level, or the noise level evaluation, is based on the value measured at any selected thickness in the range of 10 µm to 30 µm of the laminate or the polyester film.

In one or more embodiments, the polyester film 100 may exhibit a noise level of 63 dB or less, 62 dB or less, 61 dB or less, or 60 dB or less at 250 Hz in the film noise level evaluation. This indicates that the film has a relatively low noise level in the low-frequency range.

In one or more embodiments, the polyester film 100 may exhibit a noise level of 53 dB or less, 52 dB or less, 51 dB or less, or 50 dB or less at 500 Hz in the film noise level evaluation. This means that the noise level in the relatively low-frequency range, which is generally perceived as loud by humans, is reduced.

**In** one or more embodiments, the polyester film 100 may exhibit a noise level of 59 dB or less, 57 dB or less, 56 dB or less, or 55 dB or less at 1,000 Hz in the film noise level evaluation. This indicates that the noise level in the relatively low pitch range is low.

**In** one or more embodiments, the polyester film 100 may exhibit a noise level of 67 dB or less, 66 dB or less, 65 dB or less, 64 dB or less, or 63.5 dB or less at 2,000 Hz in the film noise level evaluation. This indicates that the noise level at a frequency generally perceived as loud by humans is actually reduced.

**In** one or more embodiments, the polyester film 100 may exhibit a noise level of 75 dB or less, 74 dB or less, 73 dB or less, 72 dB or less, or 71 dB or less at 4,000 Hz in the film noise level evaluation. This is a frequency range generally perceived as loud by humans and is also the range in which the loudest noise typically occurs in films, indicating that the noise level is actually reduced.

In one or more embodiments, the polyester film 100 may exhibit a noise level of 72 dB or less, 71 dB or less, 70.5 dB or less, 70 dB or less, 69 dB or less, or 68 dB or less at 8,000 Hz. This indicates that noise generation in the relatively high-frequency range is reduced.

In one or more embodiments, the polyester film 100 may exhibit a noise level of 63 dB or less, 62 dB or less, 60 dB or less, or 58 dB or less at 16,000 Hz. This indicates that noise generation in the high-frequency range is reduced.

In one or more embodiments, the polyester film may have a haze of 10% or less. Also, the haze of the polyester film may be 6.5% or more and 9.5% or less. Furthermore, the haze of the polyester film may be 7% or more and 9% or less. When the haze falls within the above range, transparency is ensured, allowing the film to be used for various applications that require light transmittance. The haze was measured using a Hazemeter (model: SEP-H) from Nihon Semitsu Kogaku.

In one or more embodiments, the polyester film 100 may have a Young's modulus of 280 kgf/mm² or less. The Young's modulus is based on measurements in accordance with ASTM D882 and refers to the average value of the film's machine direction (MD) and transverse direction (TD).

The Young's modulus may be 280 kgf/mm² or less, 275 kgf/mm² or less, 270 kgf/mm² or less, 220 kgf/mm² or less, 200 kgf/mm² or less, or 160 kgf/mm² or less. The Young's modulus may be 80 kgf/mm² or more, 100 kgf/mm² or more, 120 kgf/mm² or more, 125 kgf/mm² or more, or 150 kgf/mm² or more. The Young's modulus is one indicator of the flexibility of the polyester film. Although flexible films are generally considered to generate less noise, the inventors have confirmed through repeated experiments that the level of the Young's modulus and the degree of noise generation do not necessarily have a consistent correlation. However, it does indicate that the film has relatively flexible characteristics overall.

In one or more embodiments, the polyester film 100 may have a tensile strength of 3 kgf/mm² or more, 4 kgf/mm² or more, 5 kgf/mm² or more, or 7 kgf/mm² or more, and 17 kgf/mm² or less, 15 kgf/mm² or less, or 12 kgf/mm² or less. If the tensile strength differs between the MD and TD directions, the above tensile strength refers to their average. The polyester film may have a tensile strength suitable for use as a packaging material.

In one or more embodiments, the polyester film 100 may have an elongation of 60% or more, 70% or more, or 75% or more, and 120% or less. If the elongation differs between the MD and TD directions, the above elongation refers to their average. The polyester film may have elongation properties suitable for use as packaging material.

In one or more embodiments, the polyester film 100 may have a thickness of 1,000 µm or less, 800 µm or less, 600 µm or less, 400 µm or less, 200 µm or less, 100 µm or less, or 60 µm or less. The thickness may be 10 µm or more, or 15 µm or more. In such cases, the film may have a thickness suitable for application as packaging material.

The polyester film 100 may provide a relatively quiet polyester film that is environmentally friendly and exhibits low noise across a wide range of frequencies, from low to high, as typically perceived by humans, while maintaining mechanical strength above a certain level. Furthermore, due to its excellent thermal shrinkage characteristics, the film may exhibit minimal deformation and outstanding physical properties even when used as packaging material exposed to relatively high temperatures or printed with graphic content.

### Product

According to one or more embodiments, a product comprises the polyester resin composition described above.

The product may be provided in the form of a film, base layer, cover layer, fiber, or molded product.

The product may be a packaging material, support layer, cover layer, coating layer, fiber, molded product, and the like.

The product in the form of a film comprises the polyester film described above. Detailed descriptions of the polyester film are omitted as they are redundant with the above.

The form of the base layer refers to being applied as a support layer such as a film, multilayer product, or injection-molded product.

The form of the cover layer may be such that the polyester film is disposed on the surface of a substrate such as an injection-molded product, metal, or wood.

The packaging material may be, for example, disposable packaging, food packaging, etc., and may comprise the polyester film as-is, or further comprise an aluminum foil, color layer, and the like.

The fiber may comprise the first composition and the second composition, each forming fine fibers. The first composition and the second composition may be used as a first fine fiber and a second fine fiber, respectively, to be manufactured in the form of a fiber.

The molded product refers to being manufactured by molding the polyester resin composition or film described above using methods such as extrusion or injection. The molded product may be an injection-molded product, extrusion-molded product, thin film-molded product, blow-molded product, or blow-molded article, but is not limited thereto. It may also be used as a 3D filament, interior material for construction, etc.

The product may, for example, be in the form of a film or sheet usable as an agricultural mulching film, disposable glove, disposable film, disposable bag, food packaging, volume-based waste disposal bag, product packaging bag, etc.

The product may be in the form of a fiber usable as a woven fabric, knitted fabric, non-woven fabric, rope, etc.

The product may be in the form of a disposable container usable as a food container such as a lunchbox.

The product may also be various types of molded products such as disposable straws, disposable spoons, disposable trays, disposable forks, and the like.

The product may be a shock-absorbing packaging material for products, an interior material for automobiles, and so on.

The product is environmentally friendly due to the application of biodegradable resin, which reduces carbon dioxide emissions and enables nearly complete biodegradation under certain conditions. Also, by applying polylactic acid resin, which is being studied as a conventional biodegradable film, the noise level is reduced, mechanical strength is maintained above a certain level, and the haze value is kept at an appropriate level, making it highly useful as a packaging material. Furthermore, when manufactured in film form, strength and heat shrinkage can be controlled, leading to high applicability.

Hereinafter, the present invention will be described in more detail through specific embodiments. The following embodiment is merely an example to aid in understanding the present invention and is not intended to limit the scope of the invention.

### Preparation Example: Preparation of Polyester Resin Composition and Film Production

### 1. Production of Polyester Film of Example 1

The first composition comprised a mixed resin including 93.9 parts by weight of a polylactide-based polymer, 6 parts by weight of a polyhydroxyalkanoate-based polymer, and 0.1 parts by weight of calcium carbonate, based on 100 parts by weight in total.

The polylactide-based polymer in the first composition had a D-lactide content of about 1 to about 3 mol% and a melt viscosity of about 7,000 to about 12,000 P (poise) at 210°C. The polyhydroxyalkanoate-based polymer had a 4HB content of 30 to 35 mol%. The calcium carbonate had a particle size of D50 = 1.5 µm.

The second composition comprised 100 parts by weight of polybutylene adipate-co-terephthalate resin having a melt viscosity of about 4,000 to about 8,500 P (poise) at 210°C and a 50 mol% content of aliphatic component among its acid components.

The first composition was dried using a dehumidifying dryer at 60°C for more than 8 hours, and the second composition was dried using a dehumidifying dryer at 80°C for more than 2 hours to remove moisture.

Using two extruders and a multi-layer feedblock configured for alternating stacking with a preset number of layers, the first composition was melt-extruded using an extruder at 210°C, and the second composition was melt-extruded using another extruder at 210°C. The discharge ratio (volumetric) between the first and second compositions was set to 70:30.

In the multilayer feedblock, the first composition was branched into 36 layers, and the second composition was also branched into 36 layers, and they were alternately stacked. The resulting melt-resin layers formed a total of 72 layers. Skin layers were formed on both top and bottom outermost surfaces at about 10% of the total thickness, with the first composition applied to the skin layers so that they had the same composition as the first layer. After passing through a 780 mm die, the multilayer sheet including the outermost layers was cooled on a chill roll at 20°C to obtain a non-oriented multilayer sheet having 73 layers (where the skin layer adjacent to the first layer is considered a single layer).

The non-oriented multilayer sheet was drawn 3.0 times in the machine direction at 65°C and 4.0 times in the transverse direction at 85°C, and then heat-set at 120°C with a relaxation ratio of 1%, thereby producing a 20 µm biaxially stretched multilayer film (Example 1).

The cross-section of the polyester film sample of Example 1 was photographed with a scanning electron microscope and is shown in FIG. 4. Referring to FIG. 4, the polyester film 100 of Example 1 has skin layers 70 on both outer sides, with an intermediate layer 50 positioned therebetween. The intermediate layer 50 has a form of a laminate in which a plurality of layers are alternately stacked. In particular, the intermediate layer 50 includes thick first layers (52, PLA+PHA) appearing dark gray and thin second layers (54, PBAT) appearing white, alternately stacked. The first layers 52 and the second layers 54 are continuously formed as layers, showing that a layered structure is established.

### 2. Production of Polyester Films of Examples 2 to 4

Example 2 was prepared in the same manner as Example 1, except that in the multilayer feedblock, the first resin composition was branched into 15 layers and the second resin composition into 15 layers, and alternately stacked to form 30 layers. Skin layers were positioned on the top and bottom outermost surfaces, with the first resin composition applied to the skin layers to have the same composition as the first layer. The total number of layers in the film of Example 2 was 31, and the film thickness was 20 µm.

In Example 3, the same first and second compositions were used, but the discharge ratio (volumetric) between the first and second compositions was set to 50:50.

In the multilayer feedblock, the first composition was branched into 36 layers, and the second composition into 36 layers, and they were alternately stacked to form a total of 72 layers. Skin layers were formed on the top and bottom outermost surfaces at about 8% of the total thickness, with the first composition applied to the skin layers to have the same composition as the first layer.

The remaining processes were the same as in Example 1, thereby producing a 20 µm biaxially stretched multilayer film (Example 3).

In Example 4, the first composition comprised a mixed resin including 93.9 parts by weight of a polylactide-based polymer, 6 parts by weight of a polyhydroxyalkanoate-based polymer, and 0.1 parts by weight of calcium carbonate, based on 100 parts by weight in total.

The polylactide-based polymer in the first composition had a D-lactide content of about 1 to about 3 mol% and a melt viscosity of about 7,000 to about 12,000 P (poise) at 210°C. The polyhydroxyalkanoate-based polymer had a 4HB content of 30 to 35 mol%. The calcium carbonate had a particle size of D₅₀ = 1.5 µm.

The second composition comprised 100 parts by weight of PBSA resin, having a melt viscosity of about 4,000 to 7,000 P (poise) at 200°C, and an adipic acid content among its acid components of 25 mol% or less. The melt viscosity of PBSA was about 4,000 to 7,000 P at 200°C.

The first composition was dried using a dehumidifying dryer at 60°C for more than 8 hours, and the second composition was dried using a dehumidifying dryer at 80°C for more than 2 hours to remove moisture.

Using two extruders and a multilayer feedblock configured for alternating stacking with a preset number of layers, the first composition was melt-extruded using an extruder at 210°C, and the second composition was melt-extruded using another extruder at 200°C. In the case of the second composition, the melt temperature was set differently from that of the first composition to control viscosity. The discharge ratio (volumetric) between the first and second compositions was set to 70:30.

In the multilayer feedblock, the first composition was branched into 36 layers, and the second composition into 36 layers, and they were alternately stacked to form a total of 72 layers. Skin layers were formed on the top and bottom outermost surfaces at about 10% of the total thickness, with the first composition applied to the skin layers to have the same composition as the first layer. After passing through a 780 mm die, the multilayer sheet including the outermost layers was cooled on a chill roll at 20° C to obtain a non-oriented multilayer sheet having 73 layers, where the skin layer adjacent to the first layer is considered a single layer.

The non-oriented multilayer sheet was drawn 3.0 times in the machine direction at 65°C and 4.0 times in the transverse direction at 85°C, and then heat-set at 120°C with a relaxation ratio of 1%, thereby producing a 20 µm biaxially stretched multilayer film (Example 6).

### 3. Preparation of Polyester Films of Reference Example and Comparative Examples 1 to 3

The polyester film of the Reference Example was a general PET film produced by SKC.

In Comparative Example 1, a polylactide-based polymer having a D-lactide content of about 1 to 3 mol% and a melt viscosity of about 7,000 to 12,000 P at 210°C was used. The resin was dried using a dehumidifying dryer at 80°C for 6 hours to remove moisture and melt-extruded using an extruder at 210°C. After passing through a 780 mm die, the film was cooled on a chill roll at 20°C to obtain a single-layer non-oriented sheet. This sheet was then drawn 3.0 times in the machine direction at 65°C and 3.8 times in the transverse direction at 85°C, and heat-set at 120°C with a relaxation ratio of about 1%, to obtain a 20 µm biaxially stretched single-layer film (Comparative Example 1).

In Comparative Example 2, 10 wt% of polyhydroxyalkanoate and 90 wt% of the same polylactide-based polymer used in the first composition were hand-mixed and then blended using a twin-screw extruder at 200°C to form chips. These chips were dried using a dehumidifying dryer at 60°C for more than 8 hours. The chips were melt-extruded using a single extruder at 210°C, passed through a 780 mm die, and cooled on a chill roll at 20°C to obtain a single-layer non-oriented sheet. This sheet was then drawn 3.0 times in the machine direction at 65°C and 3.8 times in the transverse direction at 85°C, and heat-set at 120°C with a relaxation ratio of about 1%, to produce a 20 µm biaxially stretched single-layer film.

In Comparative Example 3, the first resin composition was a polylactide-based polymer having a D-lactide content of about 1 to 3 mol% and a melt viscosity of about 7,000 to 12,000 P at 210°C, and the second resin composition was PBAT resin having a melt viscosity of about 4,000 to 7,000 P at 210°C and an aliphatic acid content of 50 mol%. The first composition was dried using a dehumidifying dryer at 60°C for more than 8 hours, and the second composition was dried using a dehumidifying dryer at 80°C for more than 2 hours to remove moisture. Using two extruders and a multilayer feedblock configured for alternating stacking with two layers, the first composition was melt-extruded at 210°C, and the second composition was also melt-extruded at 210°C. The discharge ratio (volumetric) between the first and second compositions was set to 70:30. In the multilayer feedblock, the first and second compositions were each branched into 36 layers and alternately stacked. The skin layers on the top and bottom outermost surfaces comprised about 20% of the total thickness and were made of the first composition. After passing through a 780 mm die, the multilayer sheet including the outermost layers was cooled on a chill roll at 20°C to obtain a non-oriented multilayer sheet having 73 layers (with the portion where the first layer and the skin layer are directly adjacent treated as one layer).The non-oriented multilayer sheet was drawn 3.0 times in the machine direction at 65°C and 4.0 times in the transverse direction at 85°C, and then heat-set at 120°C with a relaxation ratio of 1%, thereby producing a 20 µm biaxially stretched multilayer film.

### 4. Production of Polyester Films of Examples 5 and 6 and Comparative Example 4

Example 5 was prepared in the same manner as Example 1, except that the film was produced to have a thickness of 25 µm after stretching and heat setting.

Example 6 was prepared in the same manner as Example 3, except that the film was produced to have a thickness of 25 µm after stretching and heat setting.

In Comparative Example 4, 80 wt% of the polylactide-based polymer used in Example 1 and 20 wt% of the second resin were blended and melt-blended in a biaxial extruder at 200°C. The blend was then dried in a dehumidifying dryer at 60°C for 8 hours, followed by melt-extrusion at about 210°C to produce a 30 µm monolayer non-oriented sheet, which was used as the film for Comparative Example 4.

### Evaluation Example: Evaluation of Physical Properties of Polyester Film

### Heat Shrinkage Evaluation

Samples were prepared by cutting the film into strips with a width of 15 mm and a length of 300 mm, aligning the long side with either the machine direction or the transverse direction. Within the 300 mm length, an effective initial length of 200 mm was marked. Each sample was then heat-treated in a convection oven at 100°C for 5 minutes. The length of the marked portion after the heat treatment was measured to determine the shrinkage rate according to the following equation: Heat shrinkage rate (%) = {(200 - length of the marked portion after heat treatment)/200} × 100

The shrinkage rate is expressed in %, with a positive value (or no sign) indicating shrinkage and a negative value indicating elongation.

### Noise Evaluation

Within a box made of polycarbonate having dimensions of 650 W × 450 D × 500 H mm, a film was prepared in A4 size (210 mm × 297 mm), and a digital sound level analyzer (Model: CR-162C) from Cirrus Research PIC was placed. The sound level analyzer was positioned about 10 cm away from the prepared film, and the ends of the film were held by a jig to generate noise by rotating it 180 degrees at 800 RPM for more than 30 seconds. The data were analyzed using the NoiseTools Software program applying the equivalent sound level and frequency-specific sound level modes. The results, including the sound level at specific frequencies and the equivalent sound level over the 30-second period, are shown in the table below.

### Mechanical Properties Evaluation

According to ASTM D882, film samples were prepared and cut into 150 mm length and 15 mm width, mounted with a chuck gap of 50 mm, and tested using a tensile tester (Instron 5566A) at a pulling speed of 200 mm/min.

The tensile strength was measured as the maximum strength (kgf/mm²) during tensile testing, and the elongation was measured as the percentage increase compared to the initial length at the point of sample breakage, using the same instrument.

### Haze

Haze was measured according to ASTM D1003 using a Hazemeter (Model SEP-H) from Nihon Semitsu Kogaku.

### Difference in Melt Viscosity

The difference in viscosity between compositions at the extrusion temperature was measured using a rheometer (Rheometrics Dynamic Spectrometry, RDS). When the difference in melt viscosity between the first and second compositions during melt extrusion was 3000 P or less, it was marked as "P"; when it exceeded 3000 P, it was marked as "F".

**[Table 1]**

| Example # | | | Refere nce | Compa rative Exampl e 1 | Compa rative Exampl e 2 | Exampl e 1 | Exampl e 2 | Exampl e 3 | Exampl e 4 | Compa rative Exampl e 3 |
|---|---|---|---|---|---|---|---|---|---|---|
| Film Thickness (µm) | | | PET 100% 20 µm Film | 20 | 20 | 20 | 20 | 20 | 20 | 20 |
| Number of Skin Layers | | | | Monola yer | Monola yer | 2 | 2 | 2 | 2 | 2 |
| 1st/2nd Layer Set Count | | | | - | - | 36 | 15 | 36 | 36 | 36 |
| Total Number of Layers | | | | 1 | 1 | 73 | 31 | 73 | 73 | 73 |
| 1st Layer Compositio n (parts per weights) | | PLA | | 99.9 | 90 | 65.73 | 65.73 | 46.95 | 65.73 | 69.93 |
| | | PHA | | 0 | 10 | 4.2 | 4.2 | 3 | 4.2 | 0 |
| | | Inorganic Filler* | | 0.1 | - | 0.07 | 0.07 | 0.05 | 0.07 | 0.07 |
| 2nd Layer Compositio n (parts per weights) | | PBAT | | 0 | - | 30 | 30 | 50 | - | 30 |
| | | PBSA | | - | - | - | - | - | 30 | - |
| Viscosity Difference at Extrusion Temp. | | | | - | - | P | P | P | P | P |
| Specific Gravity - 1st Composition | | | | - | - | 1.24 | 1.24 | 1.24 | 1.24 | 1.24 |
| Specific Gravity - 2nd Composition | | | | - | - | 1.22 | 1.22 | 1.22 | 1.24 | 1.22 |
| Noise (dB) | 250Hz | | 64 | 62.7 | 61 | 60.7 | 60.5 | 59.8 | - | - |
| | 500Hz | | 53.7 | 52.8 | 51.1 | 50.6 | 50.3 | 50 | - | - |
| | 1000Hz | | 59 | 59.1 | 56.1 | 54.8 | 54.4 | 54.3 | - | - |
| | 2000Hz | | 67.1 | 69.1 | 65.8 | 64.2 | 63.8 | 63.2 | - | - |
| | 4000Hz | | 73.8 | 78 | 73.8 | 72.1 | 71.8 | 70.2 | - | - |
| | 8000Hz | | 71.7 | 77.3 | 82.2 | 70.3 | 70.1 | 67.1 | - | - |
| Difference in Specific Gravity | | | - | - | - | 0.02 | 0.02 | 0.02 | 0 | 0.02 |
| Equivalent Noise Level (dB) | | | 78 | 81.2 | 76.8 | 75.1 | 75.1 | 72.9 | 77.8 | 79.8 |
| Average Tensile Strength (kgf/mm²) | | | 27.5 | 15.25 | 15.1 | 9.95 | 10.3 | 5.5 | 12.4 | 10 |
| Average Elongation (%) | | | 136 | 134 | 111 | 101.5 | 99 | 91.5 | 108 | 110 |
| Heat Shrinkage (MD 100 °C/5min)) % | | | 0.1 | 1.47 | 3.5 | 1.15 | 2.45 | 3.29 | 2.67 | 3 |
| Heat Shrinkage (TD 100 °C/5min) % | | | 0.1 | 0.6 | 2.5 | 0.93 | 1.34 | 1.91 | 1.1 | 0.5 |
| Haze(%) | | | 2.7 | 1.5 | 11.4 | 7.5 | 9.3 | 6.9 | 6.1 | 4 |

| | | | | | | | | | | |
|---|---|---|---|---|---|---|---|---|---|---|
| * The inorganic filler in Comparative Example 1 was silica. The inorganic fillers in all other compositions were calcium carbonate. | | | | | | | | | | |

**[Table 2]**

| Example # | | Comparative Example 4 | Example 5 | Example 6 |
|---|---|---|---|---|
| Film Thickness (µm) | | 30 | 25 | 25 |
| Number of Skin Layers | | Monolayer | 2 | 2 |
| 1st/2nd Layer Set Count | | - | 36 | 36 |
| Total Number of Layers | | 1 | 73 | 73 |
| 1st Layer Composition (parts per weights) | PLA | 80 | 65.73 | 46.95 |
| | PHA | 0 | 4.2 | 3 |
| | Inorganic Filler* | - | 0.07 | 0.05 |
| 2nd Layer Composition (parts per weights) | PBAT | 20 | 30 | 50 |
| | PBSA | - | - | - |
| Viscosity Difference at Extrusion Temp. | | - | P | P |
| Specific Gravity - 1st Composition | | - | 1.24 | 1.24 |
| Specific Gravity - 2nd Composition | | - | 1.22 | 1.22 |
| Noise (dB) | 250Hz | - | 62.7 | 60.9 |
| | 500Hz | - | 52.7 | 51.2 |
| | 1000Hz | - | 58.2 | 55.7 |
| | 2000Hz | - | 66.8 | 65.6 |
| | 4000Hz | - | 74.2 | 72.4 |
| | 8000Hz | - | 71.6 | 69.1 |
| Difference in Specific Gravity | | - | 0.02 | 0.02 |
| Equivalent Noise Level (dB) | | 80 | 77.1 | 75.2 |
| Average Tensile Strength (kgf/mm²) | | 4.2 | 9.3 | 4.3 |
| Average Elongation (%) | | 293 | 102.5 | 81 |
| Heat Shrinkage (MD 100 °C /5min) % | | 12.8 | 2.98 | 3.81 |
| Heat Shrinkage (TD 100 °C /5min) % | | 9.8 | 0.95 | 1.38 |
| Haze(%) | | 25 | 8.9 | 7.6 |

| | | | | |
|---|---|---|---|---|
| * The inorganic filler in Comparative Example 4 was silica. The inorganic fillers in Examples 5 and 6 were calcium carbonate. | | | | |

Although not presented as an example, when the difference in specific gravity between the first and second compositions was 0.2 or more, the multilayer sheet could not be successfully laminated during the manufacturing process and therefore could not be fabricated into a completed film.

The film samples that were successfully produced had a difference in specific gravity between the two compositions of less than about 0.1, which made overall thickness control relatively easy when forming layers using a T-die, and the overall layer structure was relatively uniform.

Table 1 presents the compositions and properties of films that were fabricated with an essentially constant thickness of 20 µm. Referring to Table 1, the equivalent noise level of petroleum-based PET film was approximately 78 dB, while the PLA monolayer film of Comparative Example 1 showed a significantly higher equivalent noise level of approximately 81.2 dB, representing a difference of more than 3 dB. Although the equivalent noise level decreased in the monolayer film of Comparative Example 2, which incorporated a small amount of PHA, it exhibited undesirable characteristics such as significantly increased heat shrinkage and haze, making it unsuitable for applications such as packaging bags.

In Examples 1 to 4, various numbers of layers and resin content were applied, resulting in excellent equivalent noise levels lower than that of petroleum-based PET films. While tensile strength decreased, it was evaluated as acceptable for use as-is or with reinforcement depending on the application. Although haze was higher than that of PLA monolayer film, it remained under approximately 10%, which is lower than Comparative Example 2. Considering the results of Examples 1 and 2, it was confirmed that haze can be controlled by adjusting the number of layers in the multilayer structure.

Comparative Example 3 applied the first layer resin as PLA alone without blending with other resins. While its tensile strength and haze were excellent, it showed relatively high noise levels and less favorable heat shrinkage properties.

Table 2 presents another comparative example involving films of different thicknesses. Although the equivalent noise levels in Examples 5 and 6 were slightly higher, this is presumed to result from the increased film thickness. Regardless of thickness, their equivalent noise levels were significantly lower than that of 20 µm PLA films. The film of Comparative Example 4 exhibited a very high equivalent noise level and showed poor results in terms of heat shrinkage and haze.

The polyester resin composition according to the embodiment may provide a composition capable of manufacturing a polyester molded article that exhibits improved noise characteristics, maintains transparency, and possesses biodegradability. The method for manufacturing a polyester film according to the embodiment may provide an efficient method for producing a biodegradable polyester film with reduced noise generation.

The polyester film according to the embodiment may provide an eco-friendly polyester film that exhibits improved noise characteristics, maintains transparency, and possesses both shrinkage resistance and biodegradability.

While the preferred embodiments of the present invention have been described in detail above, the scope of the present invention is not limited thereto, and various modifications and improvements by those skilled in the art utilizing the basic concepts defined in the following claims also fall within the scope of the present invention.

### (Description of Signs)

| | |
|---|---|
| 100: Polyester film | 50: Laminate |
| 52: First layer | 54: Second layer |
| 70: Skin layer | 10: Bar |
| 12: Fixing unit | 14: Noise analyzer |
| d: Distance | |

## Claims

1. A method of manufacturing a polyester film comprising:
a preparation operation of providing a first composition and a second composition;
a melting operation of melting the first and second compositions to provide a first molten resin and a second molten resin;
a sheet-forming operation of forming a sheet comprising a sheet laminate in which a first layer derived from the first molten resin and a second layer derived from the second molten resin are alternately laminated using a lamination device; and
a film-forming operation of stretching the sheet to provide a polyester film comprising the stretched laminate,
wherein the first composition comprises a polymer resin having lactate residues and hydroxyalkanoate residues,
the second composition comprises an aliphatic polyester resin or an aliphatic-aromatic copolyester resin, and
a difference in specific gravity between the first molten resin and the second molten resin is less than 0.2.

2. The method of claim 1,
wherein the aliphatic polyester resin comprises an adipic acid residue or a succinic acid residue, and
the aliphatic-aromatic copolyester resin comprises an aliphatic acid residue and a terephthalate residue.

3. The method of claim 1,
wherein a volume ratio of the first composition to the second composition is from 10:2 to 10:20.

4. The method of claim 1,
wherein the first composition comprises a polylactide residue and a polyhydroxyalkanoate residue in a weight ratio of from 100:2 to 100:35.

5. The method of claim 1,
wherein a difference in melt viscosity between the first molten resin and the second molten resin is 4500 P or less.

6. The method of claim 1,
wherein the laminate has a multilayer structure of 10 or more layers comprising a first layer derived from the first composition and a second layer derived from the second composition alternately laminated.

7. The method of claim 1,
wherein the stretching in the film-forming operation comprises a machine-direction stretching process and a transverse-direction stretching process,
the machine-direction stretching process comprises stretching the sheet 2 to 4 times at 50°C to 100°C, and
the transverse-direction stretching process comprises stretching the sheet 3 to 5 times at 60°C to 110°C.

8. The method of claim 1,
wherein the film-forming operation further comprises a heat setting process after the stretching,
and the heat setting process is carried out at 70°C to 150°C.

9. A polyester resin composition comprising a first composition and a second composition,
wherein the first composition comprises a polylactic acid resin and a polyhydroxyalkanoate resin,
the second composition comprises an aliphatic polyester resin or an aliphatic-aromatic copolyester resin, and
a difference in specific gravity between the first and second compositions is less than 0.2.

10. The polyester resin composition of claim 9,
wherein the aliphatic polyester resin comprises an adipic acid residue or a succinic acid residue, and
the aliphatic-aromatic copolyester resin comprises an aliphatic acid residue and a terephthalate residue.
